Europäisches Patentamt

European Patent Office

Office européen des brevets

(11) Publication number: **0 096 530**
**B1**

# EUROPEAN PATENT SPECIFICATION

(45) Date of publication of patent specification: **05.09.90**

(51) Int. Cl.⁵: **H 04 N 1/06**

(21) Application number: **83303139.6**

(22) Date of filing: **01.06.83**

(54) Scanning apparatus.

(30) Priority: **02.06.82 US 383930**

(43) Date of publication of application:
**21.12.83 Bulletin 83/51**

(45) Publication of the grant of the patent:
**05.09.90 Bulletin 90/36**

(84) Designated Contracting States:
**AT BE CH DE FR GB IT LI LU NL SE**

(56) References cited:
**US-A-3 744 858**
**US-A-3 895 689**
**US-A-4 139 243**
**US-A-4 262 594**

(73) Proprietor: **Crosfield Data Systems, Inc.**
**7942, Cluny Court**
**Springfield Virginia 22153 (US)**

(72) Inventor: **Crane, Joseph J.**
**14734 Darbydale Avenue**
**Woodbridge Virginia 22193 (US)**
Inventor: **Beasley, Daniel T.**
**7606 Hogarth Street**
**Springfield, Virginia (US)**

(74) Representative: **Arthur, George Fitzgerald et al**
**KILBURN & STRODE 30, John Street**
**London WC1N 2DD (GB)**

Courier Press, Leamington Spa, England.

## Description

This invention relates generally to scanning apparatus for example for scanning sheet material whether for reading it or writing on it by means of laser beam for example when writing the pages of a newspaper.

One form of such scanning apparatus is disclosed in U S Patent Specification US-A-4139243 published February 13th 1979, and that specification teaches the idea of scanning sheet material by forming it into part-cylindrical shape and scanning it by means of a laser beam on the axis of the cylinder and moving it rotationally and translationally.

In that specification the scanning apparatus includes a rotatable optical arrangement mounted on air journal bearings, and a linear motor for providing axial drive between stops. Inaccuracies can result from slight errors in longitudinal positioning of the optical components due to end thrusts on the rotating mechanism.

According to the present invention, the scanning system includes a pair of opposed air thrust bearings between the housing and the shaft, each bearing comprising a cavity, means for supplying air under pressure to the cavity, and an air flow restricting element, whereby the supply of air from the cavity to each thrust bearing gap can be independently controlled.

It has been discovered that by independently controlling the supply of air and particular the pressure of the air supplied to the respective air thrust bearings, end thrusts can be substantially balanced so that they do not give rise to the inaccuracies that were occasionally experienced in the prior proposal.

In a preferred form of the invention, each air flow restricting element comprises a porous plate and that in turn may constitute one of the relatively rotational surfaces of the thrust bearing.

Rotation is conveniently by means of a reaction air jet turbine, preferably at each end of the rotating, mechanism, and the turbine body itself may define the rotating thrust bearing surface.

Supply of air to the turbine or turbines can be along the interior of the shaft, and the pressure of the supply of air for that purpose can be controlled by a servo mechanism in accordance with the measured speed of rotation to tend to keep that speed constant.

The invention is related to the inventions, the subject of Patent Application Nos 83303138.8 and 83303137.0 claiming respectively a bed and support arrangement for facilitating drive of a transport in the scanner, and receiving a transport from the scanner after it has been scanned, and an arrangement of a transport for receiving a sheet to be scanned and drive means for feeding the transport and sheet into a cylindrical surface for scanning.

Opposed thrust bearings are of course known in the engineering field as disclosed for example in Swearingen's US patent US-A-3 895 689 in connection with a high speed turbine which has no axial movement of the shaft for operation.

Gas bearings are also known in themselves in the world of engineering. See Weichsel's US patent no 3 744 858.

The invention may be carried into practice in various ways and one embodiment will be described by way of example with reference to the accompanying drawings in which:

FIGURE 1 is a view partly schematic and partly perspective, of a scanning and feeding device embodying the invention;

FIGURE 2 is a cross-sectional view of the rotating scanning means and the housing therefor;

FIGURE 3 is a side view of the scanning device and shows the means for moving the scanning device laterally;

FIGURE 4 is a top view of the means for moving the scanning device laterally

FIGURE 5 is a view partly in cross-section, of the rotating scanning device and its housing;

FIGURE 6 is a top view of a transport for carrying the materials to be scanned to the scanning system;

FIGURE 7 is a cross section of registration pin (159) and its support, taken along line 7—7 of FIGURE 6;

FIGURE 8 is a top view of a transport for performing the same function as the transport of FIGURE 6, except it shows certain modified forms of tapes for holding the materials to be scanned;

FIGURE 9 is a detailed view of a portion of FIGURE 8;

FIGURE 10 is another detailed view of a portion of FIGURE 8;

FIGURE 11 is a detailed view of still another portion of FIGURE 8;

FIGURE 12 is a detailed view of yet another portion of FIGURE 8;

FIGURE 13 is a top view of a table for holding a transport. This figure is composed of four sub-figures 13A, 13B, 13C and 13D which should be put together as shown in FIGURE 21 to show FIGURE 13;

FIGURE 14 is a rear view of the table (Figure 13) for the transport. This figure is composed of two sub-figures which are to be put together to produce FIGURE 14;

FIGURE 15 is a right side view of the table (Figure 13) for the transport. The two parts of this figure are to be put together along the match line;

FIGURE 16 is a left side view of the table (Figure 13) and its associated door;

FIGURE 17 shows a disc inside the drum together with means for positioning a transport in the drum (243).

FIGURE 18 shows further details of the means in the drum for positioning a transport;

FIGURE 19 is an exploded view of certain details of FIGURE 1;

FIGURE 20 is a cross-sectional view along line 20-20 of FIGURE 1; and

FIGURE 21 shows how the sub-drawings 13A, 13B, 13C and 13D are put together to form FIGURE 13. It also shows how sub-drawing 14A and 14B form FIGURE 14.

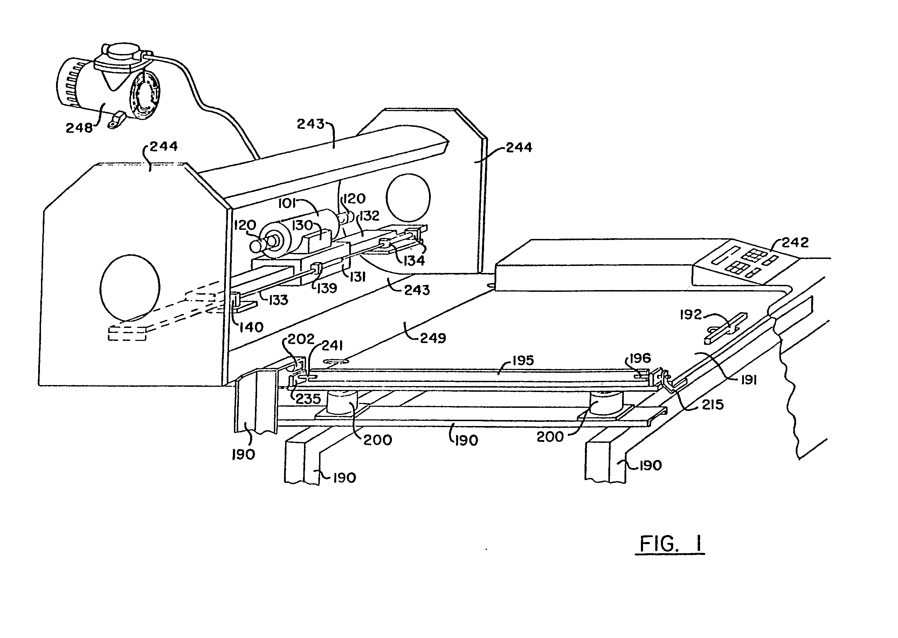

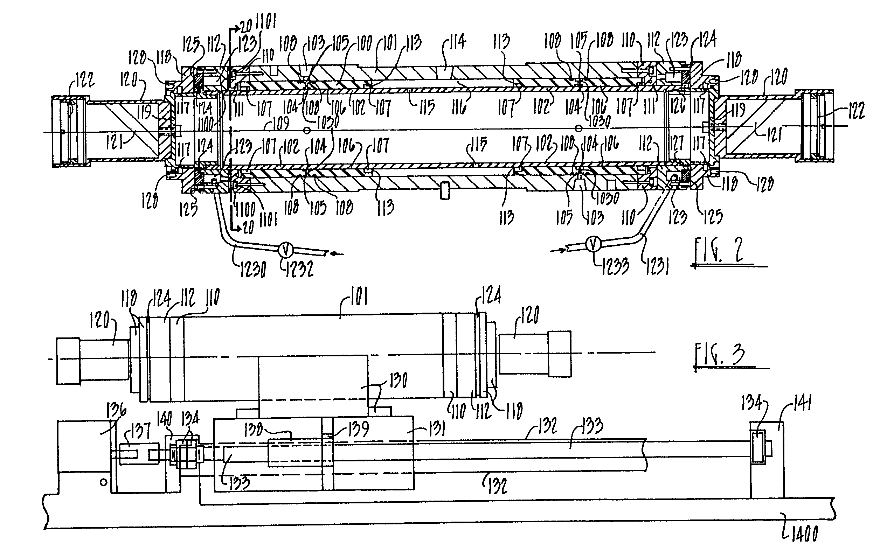

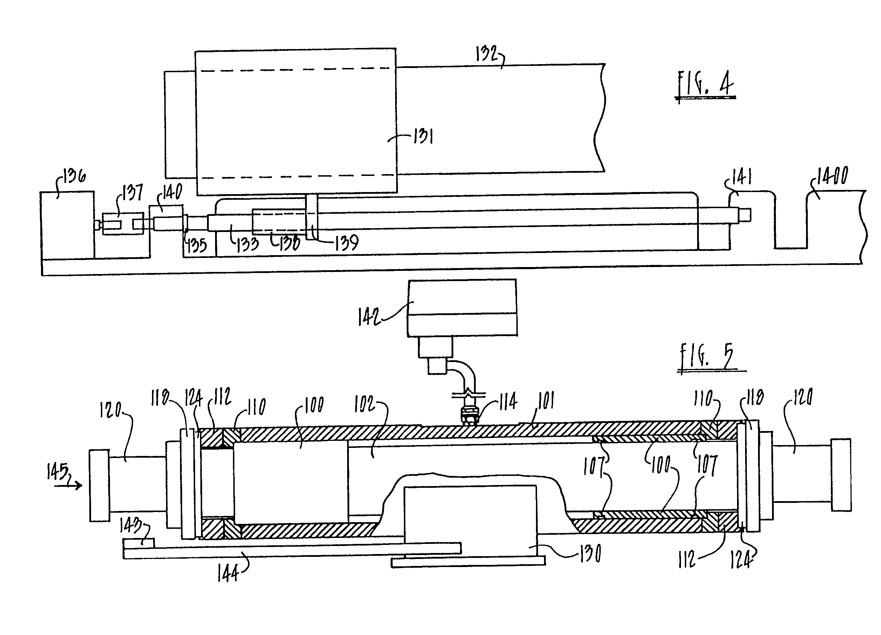

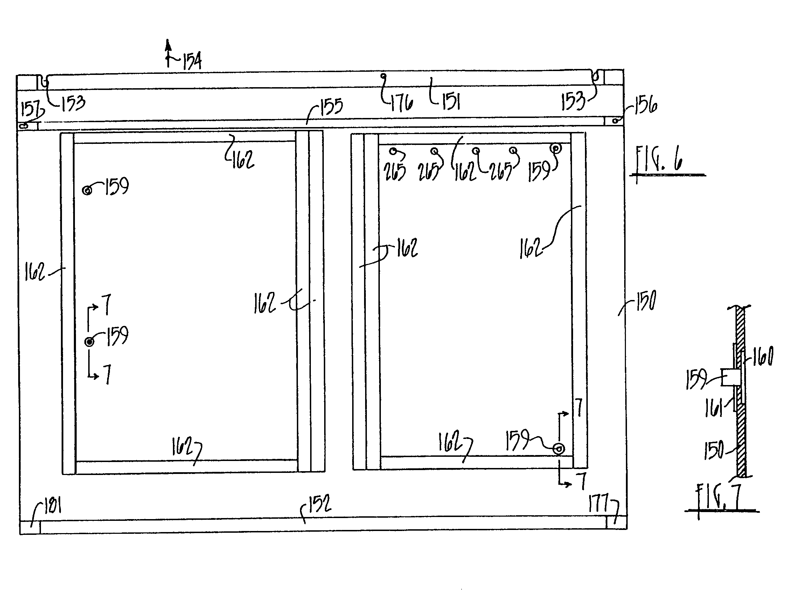

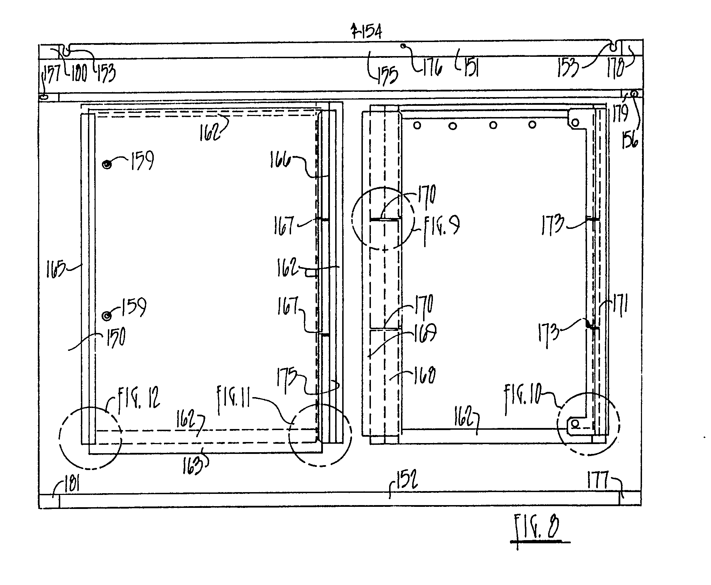

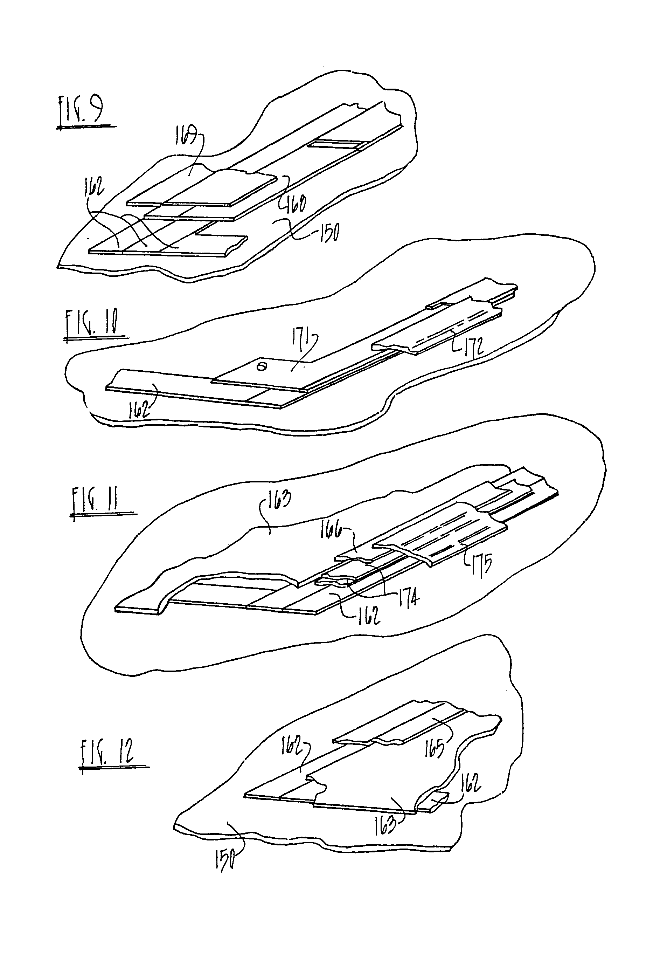

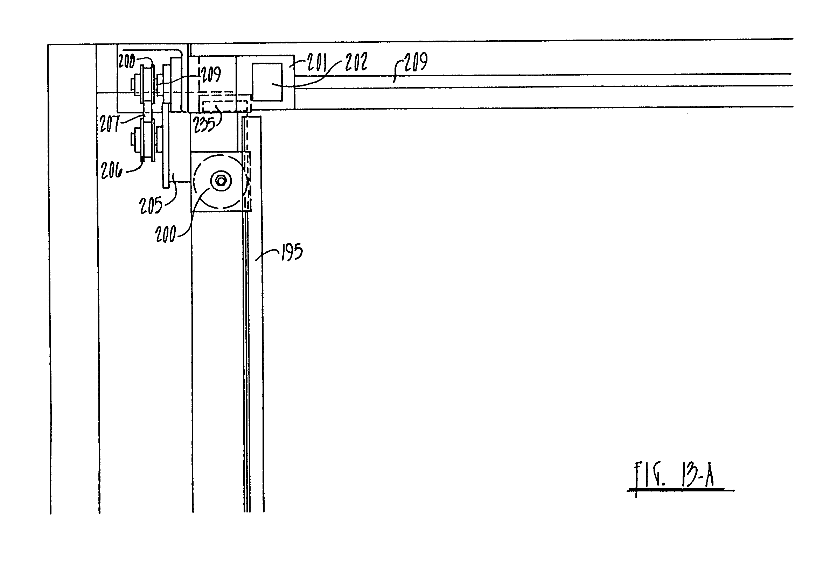

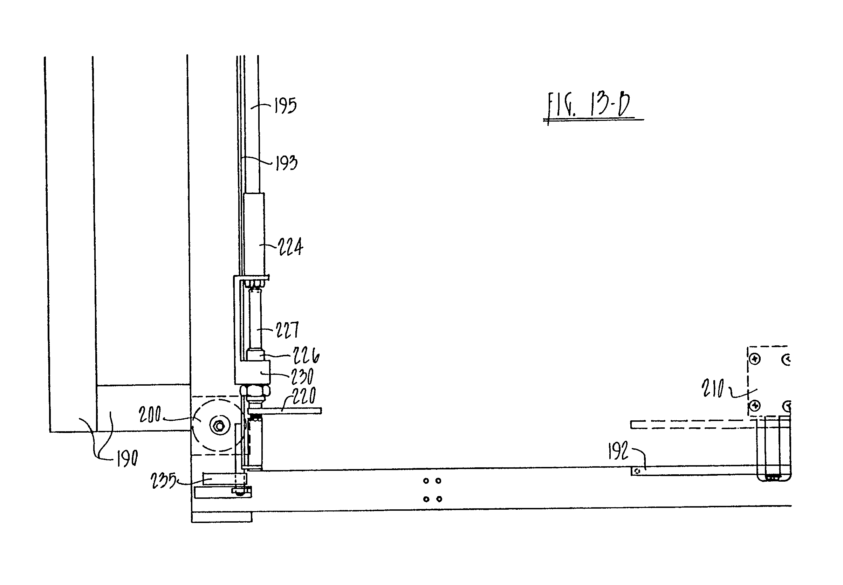

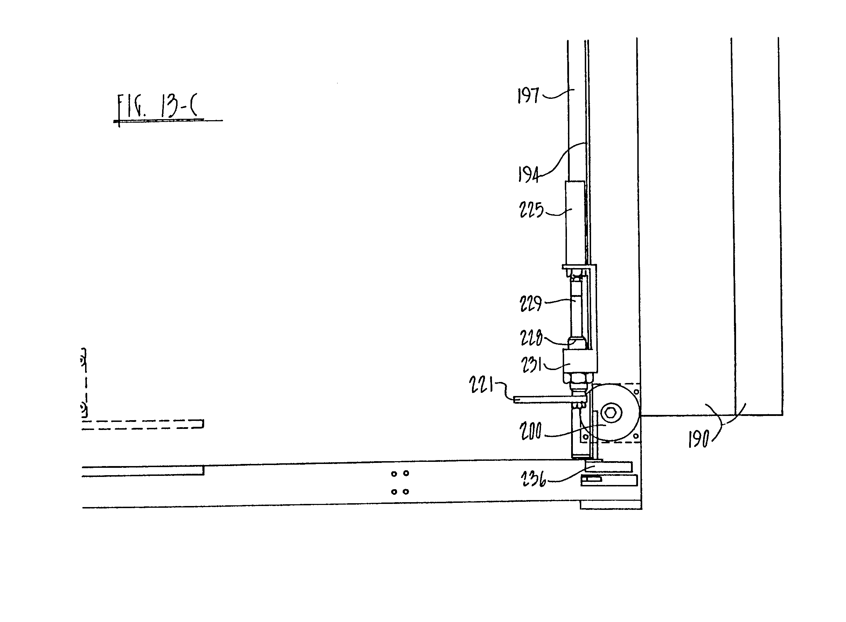

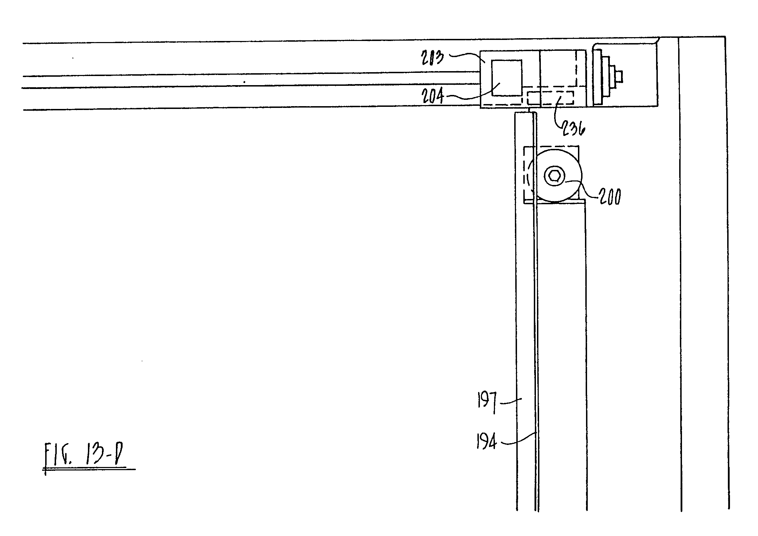

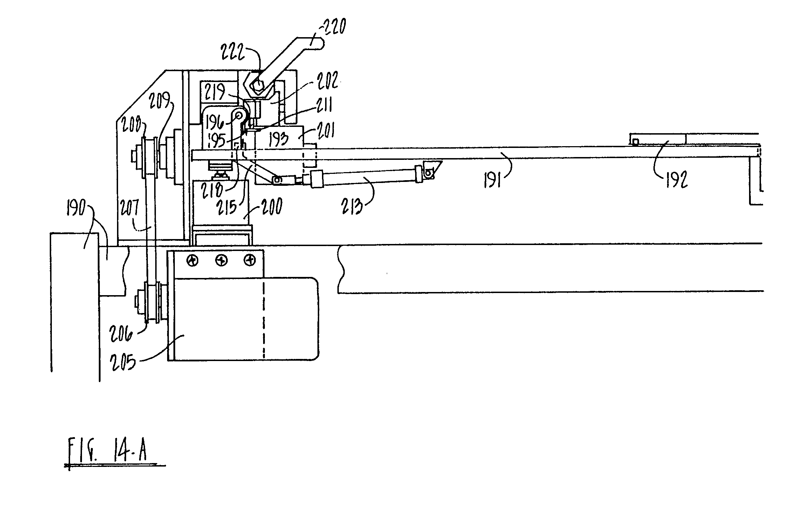

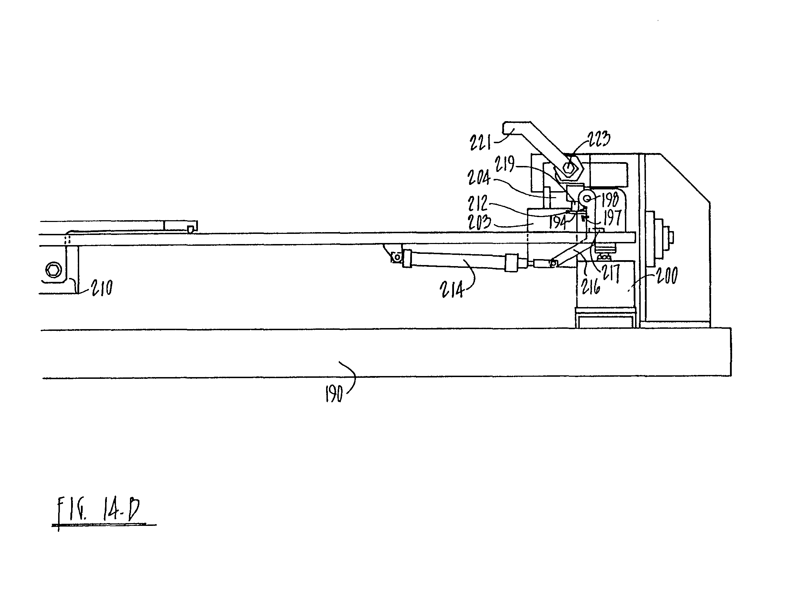

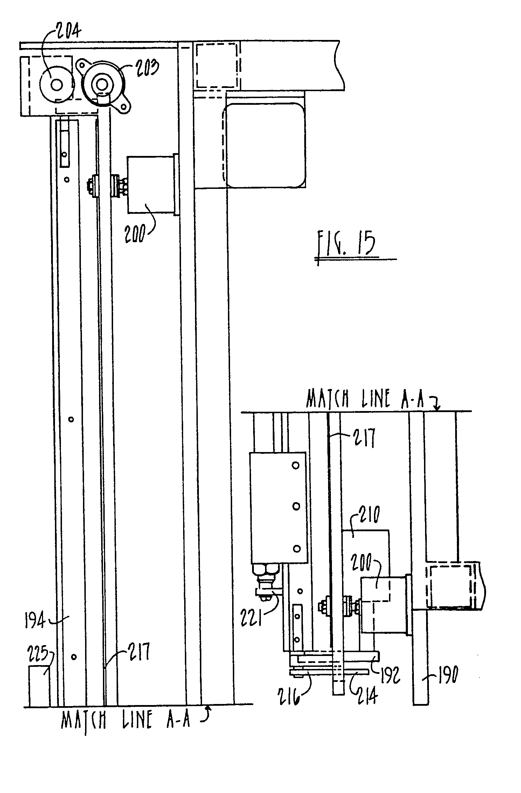

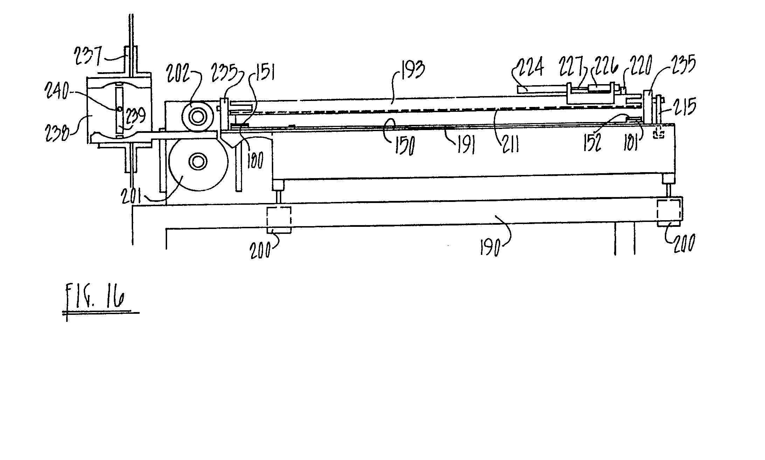

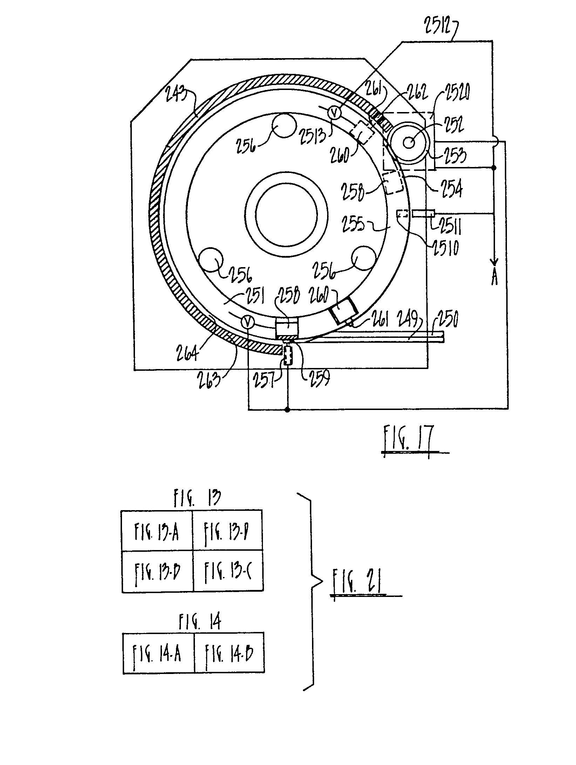

Before describing the overall machine in detail, a very brief description of it will be given with reference to FIGURE 1, as applied to the writing of pages for a newspaper.

FIGURE 1 is an overall schematic of the scanning device for reading and/or writing using laser beams.

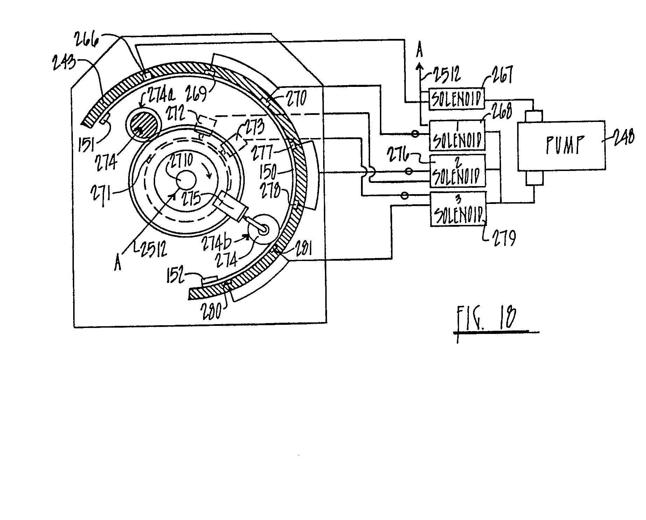

A cylinder drum (243) having side walls (244) carries support member (131) which in turn supports cradle (130) which in turn supports the housing (101) which contains rotating elements (120) with mirrors for reflecting the laser beams onto the materials to be read and/or written upon. The mirrors provide scanning by rotational and translational movement. The rotary motion is achieved by virtue of turbines (118) (Figure 2) which are operated by compressed air fed into the housing (101). Linear motion of the housing (101) and with it the elements (120) is provided by a lead screw (133), which is rotated by a stepping motor (136), (shown in Figure 3) and which passes through the internally threaded housing (138) attached to the support (131) by a clamp (139). The lead screw (133) is supported by bearings (134) located in casings (140) and (141) on a base (1400).

The reading and/or writing material is placed on a transport (150) (Figure 6) which is placed on bed (191) in front of bar (192), (Figure 1). when it is desired to move the transport (150) (Figure 6), carrying the materials to be read and/or to be written upon, into the drum (243), the bar (192) is moved forwardly a short distance which causes the transport plate (150) to pass to a group of pinch rollers (one of which (202) is shown in Figure 1). These rollers drive the transport (150) into drum (243) as will be more fully explained. A second transport (150) having areas for reading and writing material may be placed on two L-section brackets (195, 197) mounted at either side of the apparatus to pivot on shaft (196, 198) on supports (235, 236) as shown in Figure 13. After the first transport (150) has been fed into the drum (243) for the purposes of reading and/or writing, the second transport (150) may be dropped upon the bed (191) by rotating the bracket (195) and its corresponding bracket on the other side of the machine The second transport (150) therefore, drops by gravity on the bed (191) and has the material for scanning placed on it. After reading and/or writing has been accomplished on the material on the first transport (150) that was sent into the drum (243), air is exhausted from cylinders (200) to lower bed (191) so that the horizontal sections of brackets (195) are at the level to receive the returned first transport (150) that was previously fed into the machine. The material in the reading and writing sections of the first transport (150), may then be changed to provide a new page for the newspaper after the second transport (150) has been loaded and the first transport (150) dropped. The cylinders (200) must be placed under air pressure, or relieved of air pressure, as necessary to position the bed (191) and brackets (195, 197) correctly (Figure 13). When a transport (150) is to be fed into the drum (243), the bed (191) is in its raised position, and when the brackets (195, 197) are to receive a transport (150) from the drum (243) the bed (191) is in its lower position.

Vacuum provided by a vacuum pump (248) is used to hold the transport (150) in place in the drum (243) during scanning.

A ramp (249) is provided between the bed (191) and the drum (243) for guiding the transport when passing to and from the drum (243).

SCANNING MEANS

A shaft (102) rotates in the housing (101) in air bearings (100) at each end of the housing (101) around the axis (109). Air under pressure from $5.5\text{-}6.9 \cdot 10^5 Pa$ (5.6 to 7.0 Kgs per square cm) is connected to input (103) and enters an annular slot (105) which completely encircles the outer portion of each bearing (100). The air under pressure also enters annular trough (104) through holes (1030), to thus provide an air bearing surface between the rotating shaft (102) and the bearing (100). This air gap (106) between bearing (100) and shaft (102) is approximately 0.007 cms wide. Movement of air along the gap (106) is restricted by annular seals (107) leaving a gap of 0.0005 cms. They are of Vespel manufactured by Dupont. O rings (108) prevent leakage of the air from the inlet (103). A cap (110) connected to the housing (101) has a vent (111) communicating with radial holes (1110) (Figure 20) whereby any air which leaks past seal (107) is vented to the atmosphere. Some air from the gap (106) also passes the seals (107) to space (113).

Figure 20 illustrates certain details of one of the caps (110) and shows a pair of diametrically disposed axial-bores (1100) for bolts (1101) passing into the housing (101).

Air under pressure controlled by a servo mechanism (142, Figure 5) flows through inlet (114), the space (116), air ports (115), the interior of the shaft (102) and ports (117) to drive the air reaction turbines (118), one at each end of the shaft.

The servo mechanism (142) (Figure 5) is a Series T5100 current-to-pressure transducer manufactured by Fairchild Industrial Products Division, 1501, Fairchild Drive, Winston-Salem, North Carolina. Preferably this apparatus is catalogue number T5120-1 having an input impedance of 2,340 ohms and an input range of 1 to 5 milliamperes. The turbines are rotated at each end of the housing (101) and their end plates (119) in turn rotate optical housings (120), one at each end of the housing (101), which carry with them mirrors (121) and lenses (122), both of which, therefore, rotate at the same speed as the turbines (118).

One problem that has arisen in connection with air bearings such as the bearings (100) is that there is lateral movement between the housing and the rotating parts in this application, that would move the mirrors laterally and cause errors in reading and/or printing. Such movement is substantially avoided by the application of air under pressure at about $2.7 \cdot 10^5$Pa (2.8 Kgs per square cm) via feed lines (1230) and (1231) into annular cavities (123) defined in manifolds (112) secured at the ends of the housing, from each of which cavity air under pressure passes slowly through a bronze porous plate (124) secured to the outer face of the manifold, and applies pressure to an air gap of approximately 0.008 to 0.0012 cms between the porous plate (124) and the end surface (125) of the rotary turbine (118).

The air pressures in the cavities (123) are separately regulated by pressure regulators (1232) and (1233), (Figure 2) which are adjusted experimentally to achieve maximum stability and maintain the housing centred between the turbines (118) by the air thrust bearings at the gaps (124, 125).

Each end plate (119) on the turbine rotor is attached to the end of the shaft (102) by a ring (127) attached to the plate (119) and screwed into the threaded inner surface (126) of shaft (102).

Tapped holes (128) in the ends of plates (119) carry set screws for balancing the rotating mechanism mechanically.

Figure 19 is an exploded view of the details of one of the bronze porous plates (124).

The end thrust can be substantially eliminated by adjustment of the pressure regulations controlling the air pressure in the gap between the thrust surfaces respectively at (125) on the turbine and at (124) on the porous plate.

A pick-off (not shown) gives a signal response to the speed of rotation of the shaft (102) for supply to the servo mechanism (142) to control the pressure supplied at (114) to tend to keep the shaft speed constant.

DRIVE

Figure 3 shows the supporting mechanism for the apparatus shown in Figure 2. The housing (101) is supported by the cradle (130) which is mounted on the slide support (131), which is manufactured by Pneumo Precision, Inc, Precision Park, Keene, New Hampshire.

A stationary rail (132) supports the slide (131) by means of air pressure.

Running parallel to, and alongside the rail (132) is a lead screw (133) which is supported by a journal bearing (134) at the right hand end and a journal and thrust bearing (134) at the left hand end which co-operates with a collar (135) on the lead screw to prevent unwanted lateral movement. The lead screw (133) is rotated by stepping motor (136) through a coupling (137).

The stepping motor (136) may be model M8362 series motor/driver manufactured by Compumotor Corporation, 1310, Ross Street, Petaluma, California. This has 25,000 steps per revolution, and a preferred speed of approximately 1 revolution per second. Using a 10 pitch lead screw (133), the apparatus of Figure 2 scans approximately 400 lines per cm during reading or writing. Following the scanning of a complete page, the stepping motor runs in reverse at a speed of approximately 6 revolutions per second in order to return the apparatus of Figure 2 to its starting position for a new scan.

The stepping motor is a synchronous motor so that the exact lateral position of the scanning system (Figure 2) at any given time can be determined electrically.

The preferred speed for the turbine (118) is 6,000 rpm whereby the mirrors rotate at that speed during scanning.

Figure 4 shows from above the stepping motor (136) driving the lead screw (133) in a lead screw nut (138), which is held by bracket (139) firmly attached to the support slide (131) which is carried by the rail (132) on an air bearing.

Figure 5 shows how in the device of Figure 2, a laser beam (145) enters axially from the left; it is focused by the lens (122) onto the mirror (121) (Figure 2) and as the mirror rotates, the laser beam is reflected to provide scanning. This beam periodically passes encoder (143) which receives one signal pulse for each revolution of the mirror (121) to be used for counting and synchronizing. The encoder (143) is supported by bracket (144) from the cradle (130) and repeats that pulse back through the optical system.

That beam is for the reading scan.

There is a similar laser beam arranged at the right hand end for the writing action.

TRANSPORT

Figure 6 shows a transport (150) for transporting the material which is to be read (usually one full page), or the laser plate upon which writing will occur in the direction of the arrow 154 into the drum of the machine. The transport (150) is basically a sheet of epoxy glass NEMA G-10, which is flexible so it can follow the inner curved surface of the drum (243) shown in Figure 1. The sheet (150) has metal strips (151) and (152) along its forward and rear ends. The forward strip (151) has indents (153) for the purpose of coarse registration. Precise registration is achieved by a metal strip (155) having a registration hole (156) near its right end and a registration slot (157) near its left end.

Registration pins (159), for locating printing plates and paste-ups, project up from the sheet (150) as shown in FIGURE 7). Each pin (159) has a base (160) and a washer (161) to hold it in place.

A number of strips (162) of polyurethane tape define the areas for the reading and writing materials. Strips (162) serve basically as a vacuum barrier sealing in place the material on which reading or writing is to be undertaken.

A page of material which is to be converted into a printing plate is placed in the reading section, which is the left-hand rectangular section of Figure 6 bounded by tape (162), and a sheet of Plexiglas (163) (Figure 8) having clearance holes (164) for the pins (159), is applied on top of the material.

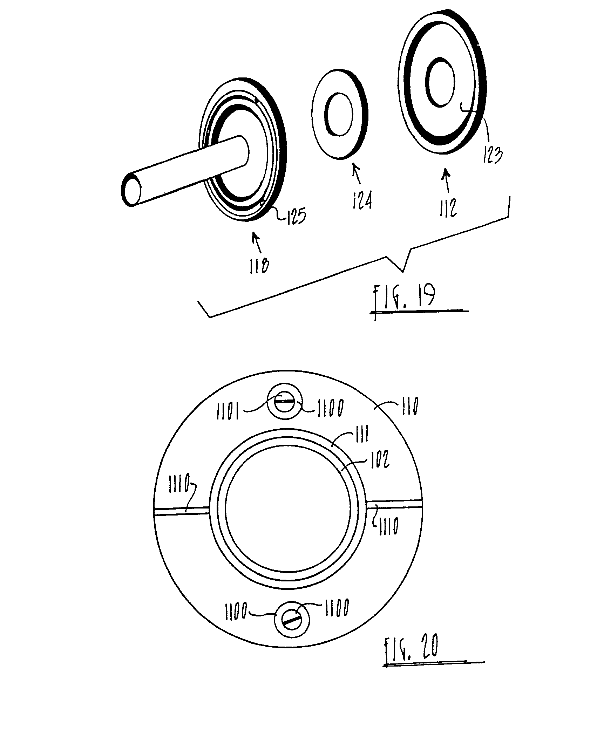

A strip of tape (165) (Figures 8 and 12) acts as a hinge and enables the Plexiglas sheet (163) to be opened like a book for the insertion or removal of material to be read. At the right edge of the Plexiglas sheet (163), a flap (166) (Figure II) is securely bonded to the glass epoxy sheet (150); it is not bonded or sealed to the Plexiglas sheet (163) and constitutes a flap which may be used to cover the right edge of the Plexiglas sheet (163). The Plexiglas sheet (163) is transparent and non-polarised. The flap (166) has slits (167) to prevent buckling when the epoxy glass sheet (150) is curved. The flaps hold the materials against the transport (150) as it curves into the drum (243).

Figure 9 is a detail of the right hand section which is used to hold the output material (such as a printing plate or lasermask) on which writing may take place. The strips of tape (162) serve the same function for the writing (right hand) rectangle as they did for the reading (left-hand) rectangle. They are covered by a flap (168) which is secured to the epoxy sheet (150) by tape (169). Slits (170) are provided to prevent buckling.

A flexible thin aluminium plate is positioned on the epoxy sheet (150) beneath the output material and is held along its left edge by flap (168). Its right edge is held by flap (171) (Figure 10).

Flap (171) is hinged by a piece of tape (172) so that the flap may be raised out of the way so that the aluminium plate and the output material can be placed in position and their left and right hand edges covered by flaps (168) and (171), so that the transport sheet (150) and the elements held by that sheet, are ready for movement into position for reading and writing.

Figure 11 shows the rear right hand corner of the Plexiglas sheet (163). Two strips of tape (174) are applied over the top of strip (162) so that the three strips of tape (162) and (174) equal the thickness of the Plexiglas sheet (163). The flap (166) is placed on top of tape (174) and is held in place by the strip of tape (175) which acts as a hinge for strip (166).

The rear left hand corner of the Plexiglas sheet (163) as shown in Figure 12, overlaps the tape (162) and is hinged to the sheet (150) by the strip of tape (165).

A position-sensing magnet (176) is located on the leading strip (151).

The ends (177), (178), (180) and (181) of the leading and rear strips (155) and (152) are thinner than the remainder for engagement by a pinch roller for driving the sheet (150) into position.

Two identical transports (150) of the type shown in Figures 6 and 8 are normally used. The one which is first fed into the drum (243) will be called the first transport (150) and the other one will be called the second transport.

TABLE

Figures 13, 14, 15 and 16 show the table on which the transport (150) of Figure 6 is mounted before being fed into the machine for reading or writing. The bed (191) of the table is supported above the frame (190) of the equipment with the bar (192) at its rear edge. The bar has a normal (rear) position shown in full lines and a forward position shown in dotted lines. The rear end of metal strip (152) of the transport (150) (Figure 6) is placed on the table directly in front of bar (192) when the latter is in its rear (full-line) position. The overall width of the transport (150) (Figure 6) is slightly less than the distance between the vertical members (193) and (194) of the brackets (195) and (197). The upper ends of the vertical members (193) and (194) are pivoted at (196) and (198) respectively. The length of transport (150), including strips (151) and (152) is slightly less than the lengths of brackets (195) and (197).

Four air cylinders (200) operate in synchronism to raise and lower the table. When there is air pressure in the upper sections of the four cylinders (200), the table bed (191) is in its lower position and when air pressure is applied to the lower section of the four cylinders the bed (191) moves to an upper position about 2.5 cms above the lower position.

With the bed (191) in its upper position, the transport (150) resting directly on bed (191) is in the horizontal tangent plane where idle rollers (202, 204) contact drive rollers (201) and (203) respectively in a pinch roller arrangement.

A motor (205) drives timing pulley (206) carrying a belt (207) for turning the driving rollers (201) and (203).

With the first transport (150) in its normal position on bed (191) with the rear edge of strip (152) in contact with a forward end of the bar (192), air pressure is applied to a cylinder (210) to drive bar (192) to its forward position and to cause the forward end (151) of the first transport (150), to move into a position where the thin ends of strip (151) are pinched between the pairs of rollers, which are driven to feed the transport (150) into the drum (243).

Then a second transport (150) is laid on the shelves (211) and (212) of brackets (195) and (197). As soon as the first transport (150) is sensed as having registered into drum (243), air pressure is applied to cylinders (213) and (214) to cause arms (215) and (216), to rotate the brackets (195) and (197) outwardly about their pivots (196) and (198) so that the second transport (150) will fall from the brackets onto the bed (191) between guides (217) and (218).

The brackets (195) and (197) are now ready to receive the first transport (150) after it has been scanned in the drum.

To prepare for this the air is released from cylinders (200) to lower the bed (191) so the horizontal shelves (211) and (212) are at the same level as the horizontal plane of the pinch rollers. The first transport (150) that is returning from the drum is therefore at the same level as the shelves (211) and (212); the motor (205) is now reversed, and the first transport (150) is driven toward the rear of the brackets (195) and (197) with its upper face urged by brushes (219) against the upper surface of shelves (211) and (212). When the first transport (150) has left the rollers (201-204), its strip (152) has moved rearwardly beyond a pair of inward arms (220) and (221), which are pivoted at (222) and (223) about horizontal arms parallel with the direction of transport movement. The arms (220) and (221) pivot into contact with the epoxy glass on the first transport (150) and then they are moved rearwardly to drive the transport until the rear edge of strip (152) is above the forward edge of bar (192) in its rearward (solid line) lower position, (pressure has been removed from cylinder (210).

It will be recalled that the second of the two transports (150) has been dropped onto the table bed (191) in its lower position while the first transport (150) is being returned. The bed is now raised and the second transport (150) is fed into the scanning drum (243) in the same way. Cylinders (213) and (214) are operated to cause the first transport (150) to fall from the shelves (211) and (212) onto bed (191). The operator now replaces the paste-up material to be printed from the left hand section and replaces output material from the right hand section of the first transport (150).

The arms (220) and (221) are moved by Stilson Miniature Rota-clamps, each comprising a housing (226) and a shaft (227). The housing (226) is supported by a frame (230) which is part of the bracket (195). When the forward end of shaft (227) is pressed rearwardly by an air cylinder (224), the arm (220) first rotates until it contacts the first transport (150), and then it translates rearwardly until it moves the first transport (150) to its ultimate final position above the edge of bar (192). The second clamp (228, 229, 231, 225) is similar.

DRUM

The drum (243) which is fed with a transport (150), is bounded by a wall (237) (Figure 16) which has an opening (238), covered by a door (239), pivoted at (240), for preventing the laser beam from causing injury. Whenever the door (239) is open for movement of a transport, a mercury switch operated by rotation of the shaft (240) de-energises a solenoid to move a shield (not shown) to a position which prevents the laser beam from being directed toward the opening (238). When a transport (150) is not entering or leaving the drum (243), the door (239) is closed.

Figure 17 illustrates the apparatus at the left end of the drum. The ramp (249) has an upstanding flange (250) at each side thereof, to guide the transport into the drum (243). As the transport (150) enters the magnet (176) (Figure 6) on the transport (150) passes across sensor (257) which actuates an electrical circuit (2571) to apply air pressure to cylinder (258) which in turn moves shoulder screw (259) upwardly. The side walls of the left hand slot (153) in the forward strip (151) of the transport (150) straddle a pin 263 on a rotatable disc (251) so that when the shoulder screw (259) moves upwardly, it clamps the left end of strip (151) to the disc (251) (Figure 17). There is a similar arrangement at the right hand side of the drum. The sensor (257) also energises a motor (2520) having a shaft (252) for rotating the disc (251) through gears (253) and (254) to move transport (150) along slot (264) to its final position.

Shortly after the disc (251) begins to rotate, a pin (261) on the drum engages registration hole (157) (see Figure 6) and thereby ensures that the transport is registered with the inside surface of the drum (243). In its final position, the pin (261) in the slot (157) is in alignment with hole (262) in the drum (243), whereupon air pressure is applied to cylinder (260) to press pin (261) through the hole (157) and into the hole (262) in order to hold the transport (150) and disc (251) in precise position in relation to the drum during scanning. The disc (251) is supported to rotate on rollers (256) about the drum (243) axis.

A magnet (2510) on the disc (251) in co-operation with a sensor (2511) controls a circuit (2512) for de-energising the motor (2520) and thus, stopping motor shaft (252) in a position where pin (261) registers with hole (262). Circuit (2512) controls a valve (2513) to admit air to cylinder (260) to move pin (261) into hole (262).

The disc (251), bearings (256), cylinders (258) and (260), shoulder screw (259) and registering pin (261), together with hole (262) are located along the left hand margin of the transport (150), within the drum, for the purpose of driving and registering the left hand portion of the transport (150). Similar devices are located at the right hand side of drum (243).

Figure 18 is a sectional view of the drum showing the vacuum system and is a view from the right hand side, as distinguished from Figure 17, which is a view from the left hand side.

In Figure 18, the transport (150) is shown in its final position with strip (151) at its forward end and strip (152) at its rear end and the registering pin (261) in hole (262).

The transport (150) has holes (265) (Figure 6) extending completely through the epoxy glass sheet (150) and located just below the upper piece of tape (162) for sealing the output material.

The aluminium plate which is used for making a printing plate extends from the lower piece of tape (162) (Figure 6) to the lower edge of the holes (265) so that there is a space between the upper end of the aluminium plate and the lower end of the upper strip of tape (162) and the holes (265) communicate with that space and are in alignment with a groove (266) which runs across the drum (243) parallel to the axis. The groove (266) is connected by tubing to a solenoid valve (267) which is in turn connected to one of two separate inputs of vacuum pump (248).

The output material (not shown) covers the air space between the upper edge of the aluminium plate and the lower edge of the forward strip of tape (162) and the vacuum created in groove (266) and extending through the holes (265) sucks the output material toward the epoxy glass plate (150) along a limited upper portion of the output material. The output material is held in position along its right and left hand sides, until vacuum is applied by the flaps (168) and (171) (Figure 10).

Solenoid valves (267) and (268) are controlled by an electrical circuit (2512) which causes these valves to open when the pin (261) is registered in the hole (262).

Grooves (269) and 270) run across drum (243) and apply vacuum to the upper part of the transport (150) to hold it firmly against the inside wall of drum (243). The vacuum for grooves (269) and (270) comes from the second input of the pump (248).

After the pin (261) has registered with hole (262) the following is the sequence of events. A cam (271) when it is normally at an angular position 180° from that shown, is not actuating either of two switches (272) and (273). A squeegee roller (274) is in its inward position (274a). Circuit (2512) starts motor (2710) for rotating the cam (271) clockwise. The squeegee roller (274) then moves outwardly into contact with the transport (150), under the force of air pressure fed into the cylinder (275). As the cam (271) rotates clockwise, the squeegee roller (274) similarly swings clockwise until it reaches the position (274b). Since the cam rotates clockwise, it first actuates switch (272) which energises solenoid valve (276) to allow vacuum to be applied to grooves (277) and (278), thus sucking another section of the transport (150) inwardly towards the inner wall of (243).

As the cam (271) rotates further in the clockwise direction, it energises switch (273) which energises solenoid valve (279) and applies vacuum to grooves (280 and 281). Like the other grooves, each of grooves (277, 278, 280 and 281) runs across the drum (243) parallel to the axis, and when vacuum is applied the transport (150) is sucked against the inner wall of the drum (243). As the cam (271) was rotating by about 160° the squeegee roller (274) has been held against the inner wall of the transport (150) and has applied pressure to press the transport (150) against the inner wall of the drum (243), to thus iron out any bubbles or other irregularities.

The suction through grooves (266, 269, and 270) is applied as soon as the pin (261) registers with hole (262). At about the same time that the vacuum is applied to those grooves, the squeegee (274) is extended, and cam (271) and squeegee (274) begin rotating clockwise to first move the cam into position, and secondly start the squeegee pressing the transport against the inner wall of (243). The squeegee is so positioned with respect to the switches (272) and (273) that the squeegee passes over the portion of the transport (150) that is covered by vacuum grooves (270) and (278) before suction is applied to those grooves. Similarly, the squeegee (274) passes over the portion of transport (150) that is covered by grooves (280) and (281) before the vacuum is applied to those grooves.

After scanning has been completed, the air pressure to cylinder (275) is reversed and the squeegee (274) retracts. The solenoid valves (267, 268, 276 and 279) are then de-energised, and pin (261) is retracted from hole (262) by cutting off the air pressure to cylinder (260). The transport (150) is now free to be removed from the drum (243). The motor (2520) which is controlling disc (251) is then reversed and the transport (150) is then ejected from the drum.

## Claims

1. A driver for an optical scanning system for sheet material or the like, including a shaft (102) rotatable in a housing (101) in air journal bearings (100) by an air motor (118); and movable translationally by a motor (136) characterised by a pair of opposed air thrust bearings (124, 125) between the housing and the shaft, each bearing comprising a cavity (123), means (1231) for supplying air under pressure to the cavity, and an air flow restricting element (124), whereby the supply of air from the cavity to each thrust bearing gap can be independently controlled.

2. A system as claimed in Claim 1 in which each air flow restricting element comprises a porous plate.

3. A system as claimed in Claim 2 in which the porous plate defines on of the relatively rotational surfaces of the thrust bearing.

4. A system as claimed in any of the preceding claims in which each air thrust bearing is defined between two closely spaced parallel flat surfaces perpendicular to the axis of rotation of the shaft, one on the housing, and one on the shaft.

5. A system as claimed in any of the preceding claims including independent controls of the pressure of air supplied to the respective cavities.

6. A system as claimed in any of the preceding claims in which the air thrust bearings are at opposite ends of the housing.

7. A system as claimed in any of the preceding claims including a turbine (118) for rotating the shaft in the housing, which turbine defines one surface (125) of the opposed surfaces of the/or each thrust bearing.

8. A system as claimed in Claim 7 in which air for driving the/or each turbine is derived from a source (114), via the interior of the shaft which is hollow to provide a reaction turbine drive to rotate the shaft in relation to the housing.

9. A system as claimed in Claim 8 including servo means (142) for controlling the supply of driving air in response to the speed of rotation of the shaft to tend to keep the speed controlled.

## Patentansprüche

1. Antriebseinrichtung für ein optisches Abtastsystem für blottförmiges Moterigl oder dgl., mit einer Welle (102), die in einem Gehäuse (101) in Luft-Achslagern (100) mittels eines Luftmotors (118) verdrehbar und durch einen Motor (136) quer verschiebbar ist, gekennzeichnet durch ein Paar entgegengesetzt zueinander angeordneter Luft-Axiallager (124, 125) zwischen dem Gehäuse und der Welle, wobei jedes Lager einen Hohlraum (123), Einrichtungen (1231) zum Zuführen von Druckluft an den Hohlraum und ein Element (124) zum Drosseln des Luftstromes aufweist, wodurch die Luftzufuhr vom Hohlraum zu jedem Axiallager-Spalt unabhängig gesteuert werden kann.

2. System nach Anspruch 1, wobei jedes Element zum Drosseln des Luftstroms eine poröse Platte aufweist.

3. System nach Anspruch 2, wobei die poröse Platte eine der jeweiligen Drehflächen des Axiallagers ausbildet.

4. System nach einem der vorangegangen Ansprüche, bei dem jedes Luft-Axiallager zwischen zwei eng beabstandeten, parallelen, ebenen, senkrecht zur Drehachse der Welle liegenden Flächen festgelegt wird, wobei eine dieser Flächen am Gehäuse und eine an der Welle ausgebildet ist.

5. System nach einem der vorangegangenen Ansprüche, mit einer unabhängigen Steuerung des Drucks der den jeweiligen Hohlräumen zugeführten Luft.

6. System nach einem der vorangegangenen Ansprüche, wobei die Luft-Axiallager on einander gegenüberliegenden Enden des Gehäuses angeordnet sind.

7. System nach einem der vorangegangenen Ansprüche, mit einer Turbine (118) zum Verdrehen der Welle im Gehäuse, wobei die Turbine eine Fläche (125) der einander gegenüberliegenden Flächen des oder jedes Axiallagers ausbildet.

8. System nach Anspruch 7, bei dem Luft zum Antrieb der Turbine von einer Quelle (114) über das Innere der Welle, die hohl ist, für die Erzeugung eines Turbinen-Reaktionsantriebs zum Drehen der Welle relativ zum Gehäuse abgeleitet wird.

9. System nach Anspruch 8, bei dem zur Ausbildung einer Steuerung für die Drehgeschwindigkeit der Welle eine Servoeinrichtung (142) zum Steuern der Zufuhr von Antriebsluft in Abhängigkeit von der Drehgeschwindigkeit der Welle vorgesehen ist.

**Revendications**

1. Mécanisme d'entraînement pour un système de balayage optique pour une matière en feuille ou analogue, comprenant un arbre (102) pouvant tourner dans un boîtier (101) dans des paliers pneumatiques (100) à l'intervention d'un moteur pneumatique (118) et pouvant effectuer un mouvement de translation à l'intervention d'un moteur (136), caractérisé par deux paliers de butée pneumatiques opposés (124, 125) prévus entre le boîtier et l'arbre, chaque palier comprenant une cavité (123), un moyen (1231) pour introduire l'air sous pression dans cette cavité, et un élément (124) étranglant l'écoulement de l'air, l'apport d'air de la cavité à chaque interstice de palier de butée peut être réglé de manière indépendante.

2. Système suivant la revendication 1, dans lequel chaque élément étranglant l'écoulement d'air comprend une plaque poreuse.

3. Système suivant la revendication 2, dans lequel la plaque poreuse est une des surfaces à rotation relative du palier de butée.

4. Système suivant l'une quelconque des revendications précédentes, dans lequel chaque palier de butée pneumatique est défini entre deux surfaces planes parallèles étroitement espacées et perpendiculaires à l'axe de rotation de l'arbre, l'une étant prévue sur le boîtier et l'autre, sur l'arbre.

5. Système suivant l'une quelconque des revendications précédentes, comprenant des dispositifs de réglage indépendants de la pression pneumatique fournie aux cavités respectives.

6. Système suivant l'une quelconque des revendications précédentes, dans lequel les paliers de butée pneumatiques se situent aux extrémités opposées du boîtier.

7. Système suivant l'une quelconque des revendications précédentes, comprenant une turbine (118) pour faire tourner l'arbre dans le boîtier, cette turbine formant une surface (125) des surfaces opposées du ou de chaque palier de butée.

8. Système suivant la revendication 7, dans lequel l'air destiné à entraîner la ou chaque turbine provient d'une source (114) et passe par l'intérieur de l'arbre qui est creux afin d'assurer l'entraînement d'une turbine à réaction pour faire tourner l'arbre par rapport au boîtier.

9. Système suivant la revendication 8, comprenant un servomécanisme (142) pour régler l'apport d'air d'entraînement en réaction à la vitesse de rotation de l'arbre en vue de tendre au maintien de cette vitesse.

FIG. I

FIG. 2

FIG. 3

EP 0 096 530 B1

FIG. 4

FIG. 5

EP 0 096 530 B1

EP 0 096 530 B1

154

153 · 153 · 156

155 · 176 · 151

FIG. 6

162

159

265 265 162 265 159

162

162

162

150

159

7

159

7

160

159

161

150

162

162 159

101 152 177

7

FIG. 7

FIG. 8

FIG. 9

161

162

160

150

FIG. 10

171

172

162

FIG. 11

163

166

175

174

162

FIG. 12

162

165

162

163

150

FIG. 13-A

FIG. 13-b

FIG. 13-C

190
197
194
202
202
208
191
200
236
221

FIG. 13-D

FIG. 14-A

FIG. 14.D

FIG. 15

MATCH LINE A-A

MATCH LINE A-A

FIG. 16

FIG. 17

FIG. 13

| FIG. 13-A | FIG. 13-B |
|-----------|-----------|
| FIG. 13-D | FIG. 13-C |

FIG. 14

| FIG. 14-A | FIG. 14-B |

FIG. 21

FIG. 18

FIG. 19

FIG. 20